# EUROPEAN PATENT SPECIFICATION

(11) **EP 0 335 812 B1**
(45) Date of publication and mention of the grant of the patent: **10.05.1995**
(21) Application number: 89480027.5
(22) Date of filing: 28.02.1989
(51) Int. Cl.: G06F 15/16, G06F 9/44

(54) **Secondary processor initialization scheme**
Sekundärprozessorinitialisierungssystem
Système d'initialisation pour processeur secondaire

(30) Priority: 28.03.1988 US 174064
(43) Date of publication of application: 04.10.1989
(73) Proprietor: International Business Machines Corporation, Armonk, N.Y. 10504 (US)
(72) Inventor: Knight, Stephen Arthur, Rochester Minnesota 55901 (US); Manges, Mark Gregory, Rochester Minnesota 55904 (US); Martel, Nelson Armand, Jr., Stewartville Minnesota 55976 (US); Miller, Gerald David, Rochester Minnesota 55904 (US); Morse, Raymond Keith, Byron Minnesota 55920 (US); Romom, Raymond Francis, Oronoco Minnesota 55960 (US); Wernimont, Anne Margaret, Rochester Minnesota 55901 (US)
(74) Representative: Lattard, Nicole

(56) References cited:
- EP-A- 0 094 177
- EP-A- 0 179 981
- US-A- 3 940 743
- PATENT ABSTRACTS OF JAPAN vol. 11, no. 253 (P-606)(2700) 18 August 1987, & JP-A-62 60042
- PATENT ABSTRACTS OF JAPAN vol. 7, no. 96 (P-193)(1241) 22 April 1983, & JP-A-58 22464
- PATENT ABSTRACTS OF JAPAN vol. 9, no. 323 (P-414)(2046) 18 December 1985, & JP-A-60 147863

## Description

### SECONDARY PROCESSOR INITIALIZATION SCHEME

This invention relates to the data processing field. More particularly, this invention is a computer system having a primary unit and a secondary unit where the primary unit controls the initialization of the secondary unit.

The typical microprocessor based computer system has a system board that contains a primary processor. Typically, this system board contains slots into which one or more adapter cards can be plugged. These adapter cards can be for controlling a printer, a display, or communications between other computers, just to name a few functions. Often these adapter cards contain a secondary microprocessor used to control the specific function of that particular adapter card.

In addition to a secondary processor, adapter cards often also contain a read only storage (ROS) or read only memory (ROM) module. This ROS (or ROM) module is used to permanently store an initialization program (otherwise known as an initial boot record) even when the power to the adapter card is off. When power is first provided to the adapter card, the secondary processor, as its first activity, executes the initialization program contained in the ROS module. This program initializes the secondary processor, the random access memory (RAM), and other hardware contained on the adapter card.

The requirement of having a ROS (or ROM) module on an adapter card to permanently store the initialization program is undesirable as it increases the cost of the adapter card, increases the time required to develop the adapter card, and makes field changes or updates of the adapter card initialization program quite difficult.

Document US-A-3 940 743 discloses a method and a computer system for transferring data between the memory of a primary unit and the memory of a secondary unit comprising the steps of:
- defining a window from primary memory address space in said primary unit from a segment of uninstalled memory address space and from secondary memory address space in said secondary unit at a segment of installed memory address space;
- retrieving data from said primary memory and placing it in said window.

However, this document does not disclose any subject matter relating to initialisation of a secondary processor.

It is a principal object of the invention to provide for the initialization of a secondary processor on an adapter card or other secondary unit where an on-board ROS or ROM module is not required to store the initialization program.

It is another object of the invention to provide a simplified method of initializing a secondary processor on an adapter card or other secondary unit where the initialization program can be easily modified.

It is still another object of the invention to reduce the cost and time of developing adapter cards or other secondary units for computer systems.

These and other objects are accomplished by the secondary processor initialization scheme disclosed herein.

In a microprocessor based computer system having a primary unit (such as a system board) and a secondary unit (such as an adapter card), the secondary processor (which is held in a non-running reset state) contained on the secondary unit can be initialized without requiring a read only storage (ROS) module or a read only memory (ROM) module to be a part of the secondary unit. Specifically, a window is defined from a segment of uninstalled memory address space from the primary unit and a segment of installed memory address space from the secondary unit. The segment of memory from the secondary unit includes the secondary processor instruction addresses which are initially executed. The primary processor on the primary unit retrieves the secondary processor's initialization program from the primary unit storage. This initialization program is then placed in the window. The secondary processor does not need to be running for primary processor window accesses. The primary processor then disables the reset line of the secondary processor. Upon having its reset line disabled, the secondary processor begins executing the initialization program. In this manner, the secondary unit is initialized without the requirement of an on-board ROS or ROM module. After the initialization program has completed, the primary unit can send other preparatory programs, such as diagnostic programs, to the secondary unit through the window. When all of the preparatory programs have been completed, the contents of the window are overwritten so the primary unit's memory and the secondary unit's memory can be fully utilized for other interprocessor communications.

Fig. 1 shows a block diagram of the primary unit and the secondary unit of the invention.

Fig. 2A shows how the window is created from the primary memory address space and the secondary memory address space in the preferred embodiment of the invention.

Fig. 2B shows how the window is created from the primary memory address space and the secondary memory address space in an alternate embodiment of the invention.

Fig. 2C shows an alternate embodiment of the invention using a shared memory scheme.

Fig. 3 shows the I/O registers of the secondary unit in more detail.

Figs. 4A-4B show a flow chart of the programmed primary processor of the invention.

Figs. 5A-5B show a flow chart of the programmed secondary processor of the invention.

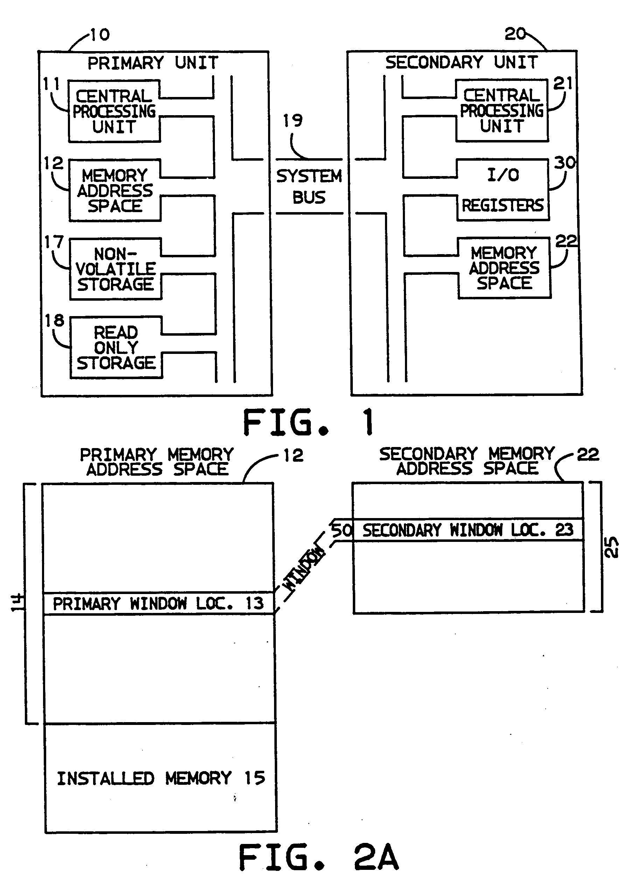

Fig. 1 shows an overall block diagram of the primary unit and secondary unit of the invention. In the preferred embodiment, primary unit 10 is the system board of an IBM PERSONAL SYSTEM/2 computer, although primary unit 10 could also be the primary unit of any computer. Secondary unit 20 in the preferred embodiment is an adapter card such as the IBM 69X6279 adapter card used on the IBM Personal System/2 computer, although secondary unit 20 does not necessarily have to be an adapter card. Secondary unit 20 could conceivably be a section of a main system board that performs a specialized function that requires a secondary processor. In addition, secondary unit 20 could be a remote device, such as a terminal, connected to primary unit 10 via a communications line.

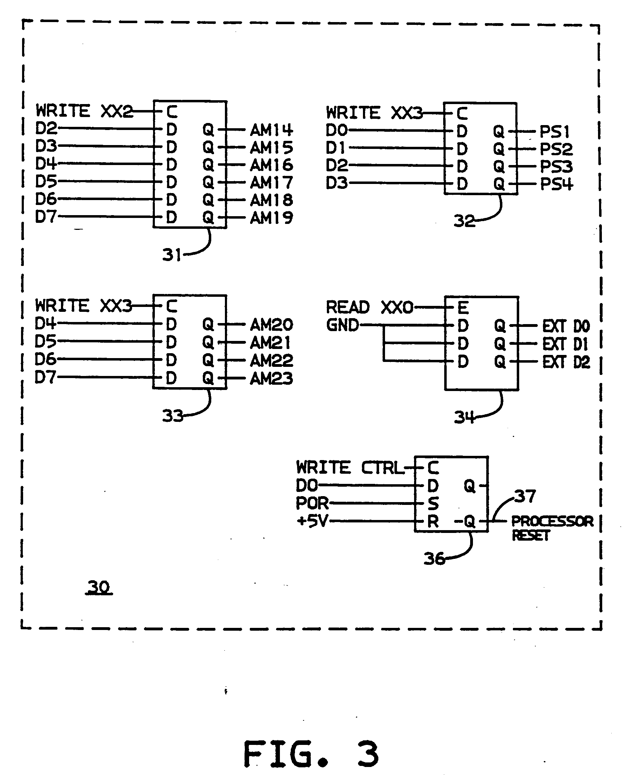

Primary unit 10 will now be described in more detail. Primary unit 10 contains a primary central processor unit 11. In the preferred embodiment, primary processor 11 is a microprocessor such as an INTEL 80286 or 80386 microprocessor, although other processors could also be used. Processor 11 is connected to primary random access memory 12, non-volatile storage 17, and read only storage (ROS) 18. Non-volatile storage 17 is typically a disk, diskette, tape, optical disk or other secondary storage device that retains its stored information after power is turned off. ROS 18 is used in a conventional manner to permanently store the initialization program for the primary unit. Primary processor 11, primary memory address space 12, storage 17 and ROS 18 are all connected to system bus 19 which connects to secondary unit 20. Secondary unit 20 contains secondary processor 21, I/O registers 30 and secondary memory address space 22. Secondary processor 21, in the preferred embodiment, is a INTEL 8088 microprocessor although other processors could also be used. Registers 30 are shown in more detail in Fig. 3 and will be discussed later.

Fig. 2A shows primary memory address space 12 and secondary memory address space 22 of the preferred embodiment of the invention in more detail. Note that primary memory address space 12 is shown to be larger than secondary memory address space 22. This would typically be the case but is not necessarily required for this invention. Primary memory address space 12 contains uninstalled primary memory 14 and installed primary memory 15. Uninstalled primary memory 14 is addressable despite the fact it is not installed. A segment of uninstalled primary memory 14 is designated as primary memory window location 13. Secondary memory address space 22 contains installed secondary memory 25. A segment of installed secondary memory 25 is designated as secondary memory window location 23.

During the initialization and preparatory process, as will be discussed in more detail later, memory locations 13 and 23 contain the same data and will be referred to collectively as window 50. It is important to keep in mind, however, that window 50 is defined by primary memory window location 13, as accessed by primary processor 11, and secondary memory window location 23, as accessed by secondary processor 21 (once it runs), during the initialization and preparation of secondary unit 20. When primary processor 11 accesses primary memory window location 13, it is accessing data contained in the real memory of secondary memory window location 23.

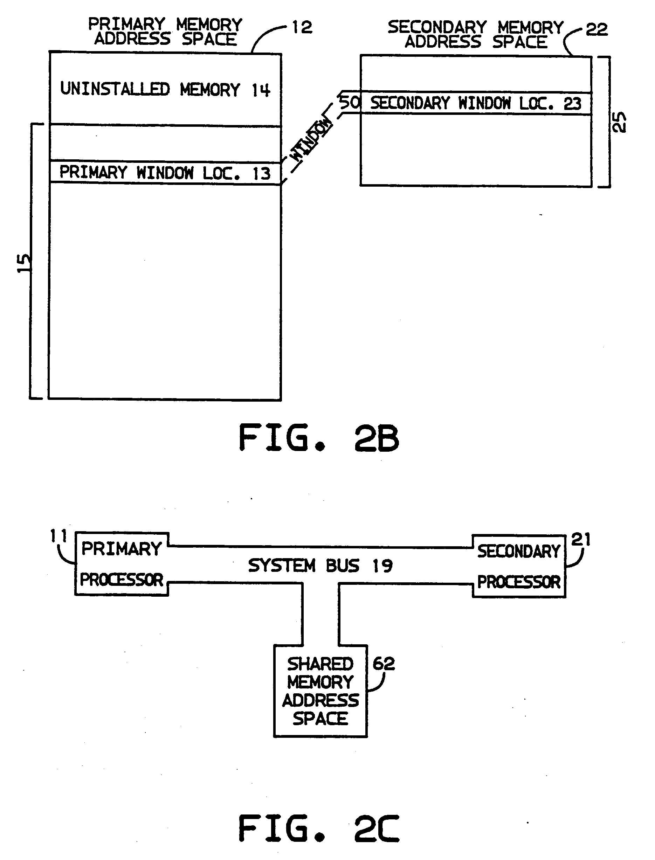

Fig. 2B shows primary memory address space 12 and secondary memory address space 22 of a first alternate embodiment in more detail. Note that primary window location 13 is in installed primary memory 15 instead of uninstalled primary memory 14, as was the case in the preferred embodiment. When secondary processor 21 writes data to secondary window location 23, the same data must be written to primary window location 13. This is not required in the preferred embodiment.

Fig. 2C shows the shared memory scheme of a second alternate embodiment. In this alternate embodiment, primary processor 11 and secondary processor 21 both access shared memory address space 62 via bus 19. Only one processor can access shared memory address space 62 at a time, so that data integrity is preserved.

Fig. 3 shows I/O registers 30 of secondary unit 20 in more detail. Registers 31 and 33 are used to define the beginning address of primary memory window location 13. In the preferred embodiment, primary memory window location 13 is 16 kilobytes in size, although this could be considerably smaller or larger or dynamically variable and still fall within the scope of the invention. Also, in the preferred embodiment, primary memory address space 12 is one megabyte in size and secondary memory address space 22 is 256 kilobytes in size, although these also could be much smaller or larger and still fall within the scope of the invention.

Registers 31 and 33 contain 10 address lines, AM14-AM23. These 10 address lines are sufficient to address any 16 kilobyte segment of the one megabyte of total memory addressability in primary memory address space 12. Clearly, more or less address lines could be used for addressing if either primary window location 13 or primary memory address space 12 were of different sizes than that of the preferred embodiment.

Register 32 is used to address the beginning of secondary window location 23 in secondary memory address space 22. Note that register 32 contains four address lines PS1-PS4. These four address lines are sufficient to address any 16 kilobyte segment in the 256 kilobytes of secondary memory address space 22. Again, the number of address lines in register 32 can be changed if the size of either primary window location 23 or secondary memory address space 22 is different than that of the preferred embodiment.

Register 34 is used to tell the primary unit if the secondary unit is installed, and contains the identification of the secondary unit.

Register 36 contains processor reset line 37 for resetting secondary processor 21. In the preferred embodiment, when processor reset line 37 is disabled, secondary processor 21 automatically jumps to secondary memory address space 22 and begins executing the first instruction contained there.

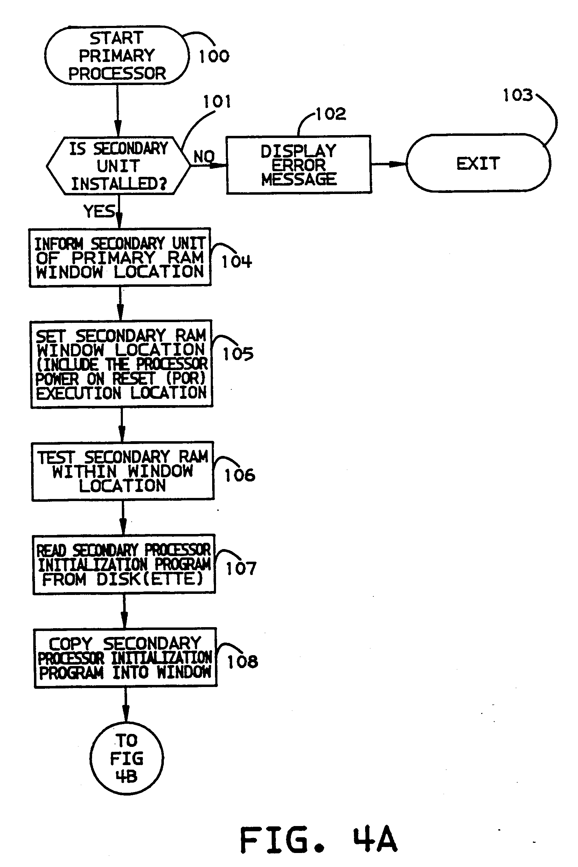

Figs. 4A-4B show the flow chart of programmed primary processor 11. Block 101 asks if secondary unit 29 is installed. This is determined by looking at the contents of register 34. If register 34 contains the ID of secondary unit 20, then primary unit 10 knows that secondary unit 20 is installed and block 101 is answered affirmatively. If secondary unit 20 is not installed, an error message is displayed in block 102 and the program exits in block 103. If secondary unit 20 is installed, flow of control moves to block 104 where the beginning address of primary memory window location 13 is sent to registers 31 and 33 of secondary unit 20. In this manner, secondary unit 20 is informed of the primary memory window location. Block 105 sets the secondary memory window location by writing the address of the beginning of the secondary memory window location 23 to register 32. Secondary memory window location 23 must include the secondary processor power-on reset execution location.

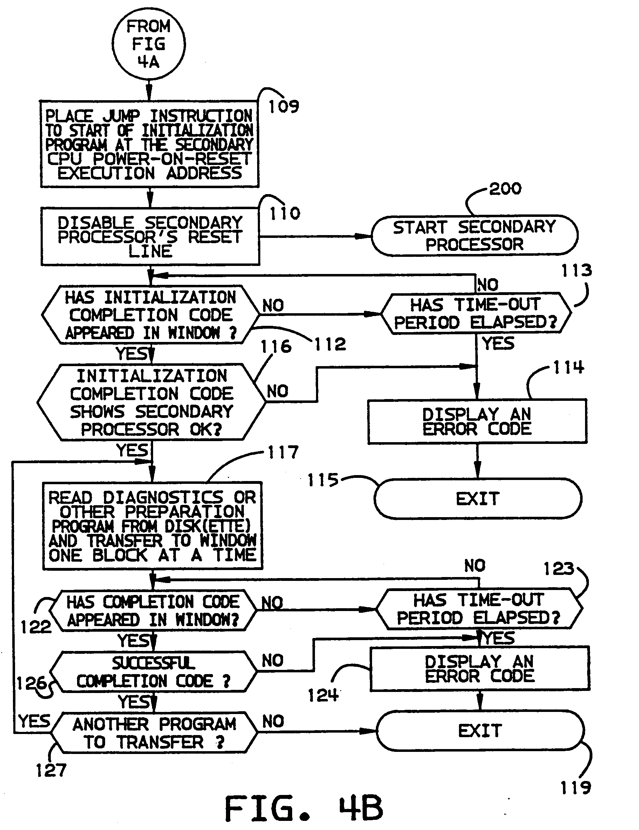

Block 106 tests secondary window location 23 to assure that this memory is operating properly. Block 107 then reads the secondary processor initialization program from storage 17 of primary unit 10. This initialization program could also be located in ROS 18 or some other non-volatile storage device part of primary unit 10. Block 108 then copies the secondary processor initialization program into window 50 created by primary memory window location 13 and secondary memory window location 23. Flow of control then moves to Fig. 4B.

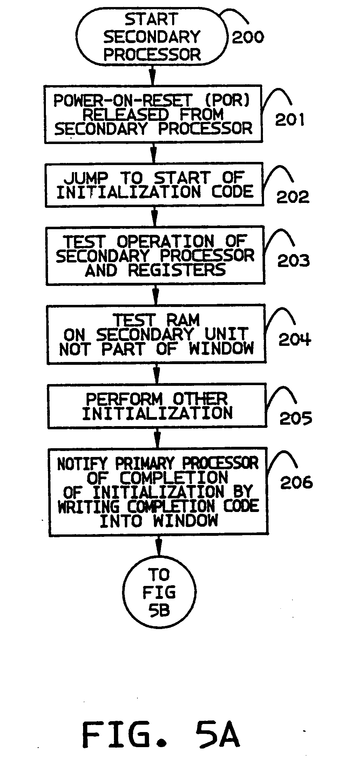

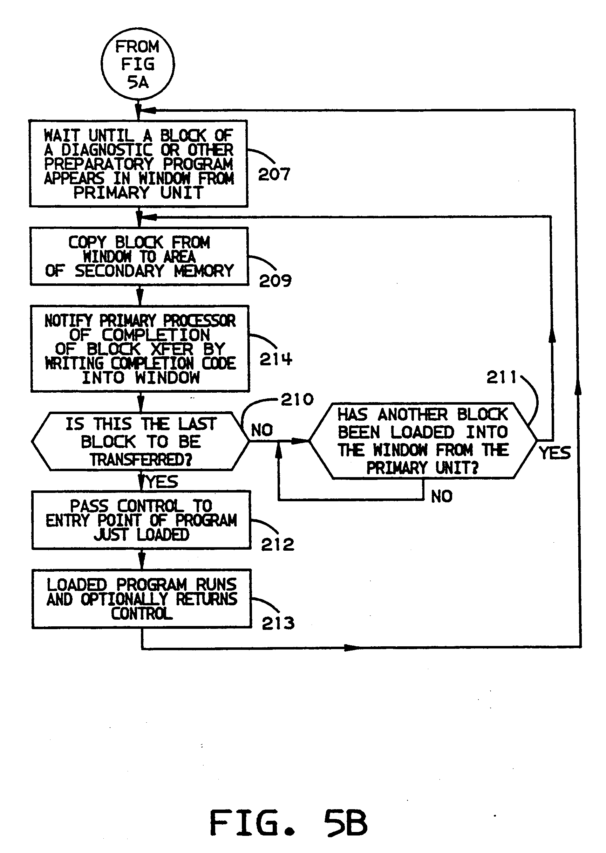

Block 109 places a jump instruction to the start of the initialization program at the secondary processor's power-on reset execution address in secondary memory address space 22 contained in window 50. Block 110 removes the reset condition from the secondary processor. This is done by writing to register 36, thereby disabling processor reset line 37. When processor reset line 37 is disabled, secondary processor 21 is started as shown in block 200. The operation of secondary processor 21 is shown in more detail in Figs. 5A and 5B and will be discussed later.

Primary processor 11 waits for secondary processor 21 to complete the initialization process and put an initialization completion code in window 50 as shown in blocks 112 and 113. In the event the time out period elapses before the initialization completion code appears in window 50, an error code is displayed in block 114 and the program exits in block 115. Otherwise, primary processor 11 loops between blocks 112 and 113 waiting for the initialization completion code from secondary processor 21. Once secondary processor 21 places an initialization completion code in the window, block 116 checks to see if this completion code indicates that secondary processor 21 has been initialized properly. If not, an error code is displayed in block 114 and the program exits in block 115. If so, block 117 reads a diagnostics or other preparatory program from storage 17 and transfers this program to window 50, one block at a time. Note that primary processor 11 will receive a completion code via window 50 from secondary processor 21 after each block has been successfully transferred.

After primary processor 11 receives a completion code from the program that the program has successfully completed (blocks 112 and 126), control loops back to block 117 and the next preparatory program (if block 127 determines there is one) is transferred to window 50. In the event the time out period elapses before the completion code appears in window 50, an error code is displayed in block 124. The capability described above allows programmers much flexibility in controlling the initialization and preparation process of secondary unit 20. When all of the diagnostics or other preparatory programs have been transferred through window 50 to secondary processor 21 and successfully executed, primary processor 11 overwrites the last block of the last preparatory program in window 50 but continues to use window 50 to communicate with secondary processor 21 by sending requests and data and receiving requests, status and data from secondary processor 21.

Note that if the preparatory program is less than or equal to the size of window 50, it would not be necessary to break it into blocks and move to a different location in secondary memory. Instead, the program can be executed directly from window 50 in a manner similar to how the initialization program is executed.

Figs. 5A-5B show a flow chart of programmed secondary processor 21. Block 201 indicates that processor reset line 37 of register 36 has been disabled and secondary processor 21 has been reset. In block 202, processor 21 jumps to the start of the initialization program that is the destination of the jump instruction placed in secondary memory address space 22 by processor 11 in block 109. Block 203 tests the operation of secondary processor 21 and its associated registers. In block 204, secondary processor 21 tests the portion of secondary memory address space 22 not part of secondary memory window location 23. Block 205 performs any other initialization steps that may be required, and block 206 informs the primary processor of the completion of the initialization. This is done by placing a completion code in window 50. If secondary processor 21 has completed initialization successfully, a successful completion code is placed in window 50. However, if secondary processor 21 has not completed initialization successfully (due to a detected failure of one of the tests in blocks 203 or 204), an unsuccessful completion code is placed in window 50. This completion code is analyzed by primary processor 11 in block 116 of Fig. 4B, as has been discussed. Flow of control then moves to block 207 in Fig. 5B.

Block 207 waits for a block of a diagnostic or other preparatory program to be placed in window 50 by primary unit 10. Block 209 copies this block of a diagnostic or other preparatory program to a designated area of secondary memory address space 22. Block 214 notifies the primary processor of the completion of the block transfer operation by writing a completion code into window 50. Block 210 then looks to see if this is the last block of the program to be transferred. If not, block 211 loops until another block has been loaded. When another block has been loaded, flow of control returns back to block 209 where the additional block is then copied into secondary memory address space 22.

When block 210 indicates that the last block of the program has been transferred, block 212 passes control to the entry point of the program just loaded in secondary memory address space 22.

In block 213, the loaded program runs and sends a completion code to primary processor 11 indicating successful execution. The loaded program then returns control to secondary processor 21 if it is not the last preparatory program to be executed. If block 213 returns control, flow of control returns to block 207 where secondary processor 21 waits for a block of an additional diagnostic or other preparatory program to appear in the window from primary unit 10. If block 213 does not return control, the loaded program was the last preparatory program, and secondary window location 23 is overwritten and used by secondary processor 21 to communicate with primary processor 11, as has already been discussed.

If the second alternate embodiment shown in Fig. 2C is used, the flow charts shown in Figs. 4A-4B and 5A-5B would be modified slightly. Specifically, the window concept would be replaced by the shared memory concept. For example, block 108 would read "copy secondary processor initialization program into shared memory address space." The jump instruction placed at the POR execution addres in block 109 would cause the secondary program to jump to the shared memory. Likewise, all completion codes would be sent to shared memory 62 by secondary processor 21 and read from shared memory 62 by primary processor 11.

While the invention has been described with respect to the preferred embodiment, it will be understood by those skilled in the art that various changes in detail may be made therein without departing from the teaching of the invention. For example, the primary and second processor could operate more in a master/slave relationship, where the primary processor completely controls the transfer of blocks of diagnostic or preparatory programs to the secondary memory without assistance of the secondary processor. This could be done by moving the window around the secondary memory. In addition, the initialization program could be larger than the size of window 50. In this event, the initialization program would be broken into blocks and sent to secondary unit 20 in a manner similar to how the diagnostics or other preparatory programs are sent, as described in blocks 117-127 in Fig. 4B.

## Claims

1. A method of initializing a secondary unit 20 having a secondary processor (21) having a reset line, from a primary unit (20) having a primary processor (11), comprising the step of defining a window (50) from primary memory address space (12) in said primary unit and from secondary memory address space (22) in said secondary unit characterized in that it further comprises the steps of:
retrieving an initialization program for said secondary unit from storage (17) in said primary unit;
placing said initialization program in said window;
disabling the reset line (17) of said secondary processor by said primary processor; and
initializing said secondary processor from said ini-tialization program contained in said window.

2. The method of claim 1, further comprising the steps of:
retrieving a preparatory program for said secondary unit from said storage with said primary processor;
placing said preparatory program in said window with said primary processor; and
executing said preparatory program by said secondary processor.

3. The method of claim 1, further comprising the steps of:
retrieving a block of a preparatory program for said secondary unit from said storage with said primary processor, said reparatory program comprising a plurality of blocks;
placing said block in said window with said primary processor;
copying said block into said secondary memory; repeating said retrieving, placing, and copying steps for each block of said preparatory program until said preparatory program is in said secondary memory; and
executing said preparatory program by said secondary processor.

4. A computer system comprising a primary unit (10) connected to a secondary unit (20), said primary unit comprising a primary processor (11), a primary memory (12) and a primary storage (17); said secondary unit comprising a secondary processor (21), and a secondary memory (22) address space; charactererized in that said computer system further comprises
means (31, 32, 33) for defining a window (50) from said primary memory address space and said secondary memory address space;
means for retrieving an initialization program for said secondary unit from said primary storage;
means for placing said initialization program in said window;
means (36) for disabling the reset line (37) of said secondary processor by said primary processor; and
means for initializing said secondary processor from said initialization program contained in said window.

5. The computer system of claim 4, further comprising:
means for retrieving a preparatory program for said secondary unit from said primary storage with said primary processor;
means for placing said preparatory program in said window with said primary processor; and
means for executing said preparatory program by said secondary processor.

6. The computer system of claim 4, further comprising:
means for retrieving a block of a preparatory program for said secondary unit from said primary storage with said primary processor, said preparatory program comprising a plurality of blocks;
means for placing said block in said window with said primary processor;
means for copying said block into said secondary memory;
means for repeating said retrieving, placing, and copying steps for each block of said preparatory program until said preparatory program is in said secondary memory;
means for executing said preparatory program by said secondary processor.

7. A method of initializing a secondary unit having a secondary processor (21), from a primary unit having a primary processor (11), said primary unit and said secondary unit connected to a shared memory address space (62) via bus (19), comprising the steps of:
retrieving an initialization program for said secondary unit from storage in said primary unit;
placing said initialization program in said shared memory address space;
disabling the reset line of said secondary processor by said primary processor; and
initializing said secondary processor from said initialization program contained in said shared memory address space.

8. The method of claim 7, further comprising the steps of:
retrieving a preparatory program for said secondary unit from said storage;
placing said preparatory program in said shared memory address space; and
executing said preparatory program by said secondary processor.

9. A computer system comprising a primary unit (11) connected to a secondary unit (21), said primary unit and said secondary unit connected to a shared memory address (62) space, said primary unit comprising a secondary processor, and a secondary memory; characterized in that said computer system further comprises:
means for retrieving an initialization program for said secondary unit from said primary storage;
means for placing said initialization program in said shared memory address space;
means for disabling the reset line of said secondary processor by said primary processor; and
means for initializing said secondary processor from said initialization program contained in said shared memory address space.

10. The computer system of claim 9, further comprising:
means for retrieving a preparatory program for said secondary unit from said primary storage;
means for placing said preparatory program in said shared memory address space; and
means for executing said preparatory program by said secondary processor.

## Patentansprüche

1. Verfahren zur Initialisierung einer Sekundäreinheit 20 mit einem Sekundärprozessor (21) der eine Rücksetzleitung besitzt, von einer Primäreinheit (20) aus, die einen Primärprozessor (11) besitzt, bestehend aus den Schritten der Definition eines Fensters (50) aus dem Adressraum eines primären Arbeitsspeichers (12) in der Primäreinheit und aus dem Adressraum eines sekundären Arbeitsspeichers (22) in der Sekundäreinheit, dadurch gekennzeichnet, daß sie weiterhin folgende Schritte umfaßt:
Abrufen eines Initialisierungsprogramms für die Sekundäreinheit aus Speicher (17) in der Primäreinheit;
Stellen des Initialisierungsprogramms in das Fenster;
Sperren der Rücksetzleitung (17) des Sekundärprozessors durch den Primärprozessor; und
Initialisieren des Sekundärprozessors durch das Initialisierungsprogramm das sich in dem Fenster befindet.

2. Verfahren nach Anspruch 1, das weiterhin die folgenden Schritte umfaßt:
Abrufen eines Vorlaufprogramms für die Sekundäreinheit aus dem Speicher mit dem Primärprozessor;
Stellen des Vorlaufprogramms in das Fenster mit dem Primärprozessor;
und Ausführen des Vorlaufprogramms durch den Sekundärprozessor:

3. Verfahren nach Anspruch 1, das weiterhin die folgenden Schritte umfaßt:
Abrufen eines Blockes eines Vorlaufprogramms für die Sekundäreinheit aus dem Speicher mit dem Primärprozessor, wobei das Vorlaufprogramm eine Vielzahl von Blöcken umfaßt;
Stellen des Blockes in das Fenster mit dem Primärprozessor;
Kopieren des Blockes in den Sekundärarbeitsspeicher
Wiederholen der Abrufungs-, Stell- und Kopierschritte für jeden Block des Vorlaufprogramms bis sich das Vorlaufprogramm in dem Sekundärspeicher befindet; und
Ausführen des Vorlaufprogramms durch den Sekundärprozessor.

4. Computersystem, bestehend aus einer Primäreinheit (10), die mit einer Sekundäreinheit (20) verbunden ist, wobei die Primäreinheit einen Primärprozessor (11), einen Primärarbeitsspeicher (12) und einen Primärspeicher (17) umfaßt sowie die Sekundärspeichereinheit einen Sekundärprozessor (21) und einen Adressraum des Sekundärspeichers (22) umfaßt; dadurch gekennzeichnet, daß das Computersystem weiterhin folgendes umfaßt:
Mittel (31, 32, 33) für Festlegung eines Fensters (50) aus dem Adressraum des primären Arbeitsspeichers und dem Adressraum des sekundären Arbeitsspeichers;
Mittel für die Wiederherstellung eines Initialisierungsprogramms für die Sekundäreinheit aus dem Primärspeicher;
Mittel für das Stellen des Initialisierungsprogramms in das Fenster;
Mittel (36) für die Sperrung der Rücksetzleitung (37) des Sekundärprozessors durch den Primärprozessor; und
Mittel für die Initialisierung des Sekundärprozessors durch das in dem Fenster enthaltene Initialisierungsprogramm.

5. Computersystem nach Anspruch 4, das weiterhin folgendes umfaßt:
Mittel für die Wiederherstellung eines Vorlaufprogramms für die Sekundäreinheit aus dem Primärspeicher mit dem Primärprozessor;
Mittel für das Stellen des Vorlaufprogramms in das Fenster mit dem Primärprozessor; und
Mittel für die Ausführung des Vorlaufprogramms durch den Sekundärprozessor.

6. Computersystem nach Anspruch 4, das weiterhin folgendes umfaßt:
Mittel für die Wiederherstellung eines Blockes aus einem Vorlaufprogramm für die Sekundäreinheit aus dem Primärspeicher mit dem Primärprozessor, wobei das Vorlaufprogramm eine Vielzahl von Blöcken umfaßt;
Mittel für das Stellen des Blockes in das Fenster mit dem Primärprozessor;
Mittel für das Kopieren des Blockes in den Sekundärarbeitsspeicher
Mittel für die Wiederholung der Abrufungs-, Stell- und Kopierschritte für jeden Block des Vorlaufprogramms, bis sich das Vorlaufprogramm in dem Sekundärarbeitsspeicher befindet;
Mittel für die Ausführung des Vorlaufprogramms durch den Sekundärprozessor.

7. Verfahren für die Initialisierung einer Sekundäreinheit mit einem Sekundärprozessor (21) aus einer Primäreinheit mit einem Primärprozessor (11), wobei die Primäreinheit und die Sekundäreinheit mit einem gemeinsamen Adressraum des Arbeitsspeichers (62) über einen Bus (19) verbunden sind, die folgende Schritte umfaßt:
Abrufen eines Initialisierungsprogramms für die Sekundäreinheit aus dem Speicher in die Primäreinheit;
Stellen des Initialisierungsprogramms in den gemeinsam genutzten Adressraum des Arbeitsspeichers;
Sperren der Rücksetzleitung des Sekundärprozessors durch den Primärprozessor; und
Initialisieren des Sekundärprozessors durch das Initialisierungsprogramm das in dem gemeinsamen Adressraum des Arbeitsspeichers enthalten ist.

8. Verfahren nach Anspruch 7, das weiterhin die folgenden Schritte umfaßt:
Abrufen eines Vorlaufprogramms für die Sekundäreinheit aus dem Speicher;
Stellen des Vorlaufprogramms in den gemeinsam genutzten Adressraum des Arbeitsspeichers; und
Ausführen des Vorlaufprogramms durch den Sekundärprozessor.

9. Computersystem, bestehend aus einer Primäreinheit (11), die mit einer Sekundäreinheit (21) verbunden ist, wobei die Primäreinheit und die Sekundäreinheit mit einem gemeinsam genutzten Adressraum des Arbeitsspeichers (62) verbunden sind, sowie die Primäreinheit einen Sekundärprozessor und einen Sekundärarbeitsspeicher umfaßt; dadurch gekennzeichnet, daß das Computersystem weiterhin folgendes umfaßt:
Mittel für die Wiederherstellung eines Initialisierungsprogramms für die Sekundäreinheit aus dem Primärspeicher;
Mittel für das Stellen des Initialisierungsprogramms in den gemeinsam genutzten Adressraum des Arbeitsspeichers;
Mittel für die Sperrung der Rücksetzleitung des Sekundärprozessors durch den Primärprozessor; und
Mittel für die Initialisierung des Sekundärprozessors durch das Initialisierungsprogramm, das in dem gemeinsam genutzten Adressraum des Arbeitsspeichers enthalten ist.

10. Computersystem nach Anspruch 9, das weiterhin folgendes umfaßt:
Mittel für die Wiederherstellung eines Vorlaufprogramms für die Sekundäreinheit aus dem Primärspeicher;
Mittel für das Stellen des Vorlaufprogramms in den gemeinsam genutzten Adressraum des Arbeitsspeichers; und
Mittel für die Ausführung des Vorlaufprogramms durch den Sekundärprozessor.

## Revendications

1. Une méthode d'initialisation d'une unité secondaire 20 comprenant un processeur secondaire (21) ayant une ligne de restauration, depuis une unité principale (20) comprenant un processeur principal (11), qui comprend une étape de définition d'une fenêtre (50) à partir de l'espace d'adresses de mémoire principale (12) dans ladite unité principale et à partir de l'espace d'adresses de mémoire secondaire (22) dans ladite unité secondaire, caractérisée en ce qu'elle comprend en outre les étapes suivantes:
- la récupération d'un programme d'initialisation pour ladite unité secondaire, dans la mémoire (17) de ladite unité principale;
- le placement dudit programme d'initialisation dans ladite fenêtre;
- le déconditionnement de la ligne de restauration (37) dudit processeur secondaire par ledit processeur principal; et
- l'initialisation dudit processeur secondaire à partir dudit programme d'initialisation contenu dans ladite fenêtre.

2. La méthode de la revendication 1 comprenant en outre les étapes suivantes:
- la récupération d'un programme préparatoire pour ladite unité secondaire, dans ladite mémoire, avec ledit processeur principal;
- le placement dudit programme préparatoire dans ladite fenêtre avec ledit processeur principal; et
- l'exécution dudit programme préparatoire par ledit processeur secondaire.

3. La méthode de la revendication 1 comprenant en outre les étapes suivantes:
- la récupération d'un bloc d'un programme préparatoire pour ladite unité secondaire dans ladite mémoire, avec ledit processeur principal, ledit programme préparatoire comprenant une pluralité de blocs;
- le placement dudit bloc dans ladite fenêtre avec ledit processeur principal;
- la copie dudit bloc dans ladite mémoire secondaire;
- la répétition desdites étapes de récupération, de placement et de copie pour chaque bloc dudit programme préparatoire jusqu'à ce que ledit programme prépratoire soit dans ladite mémoire secondaire; et
- l'exécution dudit programme préparatoire par ledit processeur secondaire.

4. Un système d'ordinateur comprenant une unité principale (10) connectée à une unité secondaire (20), ladite unité principale comprenant un processeur principal (11), une mémoire principale (12) et une mémoire principale (17); ladite unité secondaire comprenant un processeur secondaire (21), et un espace d'adresses de mémoire secondaire (22); caractérisé en ce que ledit système d'ordinateur comprend en outre:
- des moyens (31, 32, 33) pour définir une fenêtre (50) depuis ledit espace d'adresses de mémoire principale et ledit espace d'adresses de mémoire secondaire;
- des moyens pour récupérer un programme d'initialisation pour ladite unité secondaire depuis ladite mémoire principale;
- des moyens pour placer ledit programme d'initialisation dans ladite fenêtre;
- des moyens (36) pour le déconditionnement de la ligne de restauration (37) dudit processeur secondaire par ledit processeur principal; et
- des moyens pour initialiser ledit processeur secondaire à partir dudit programme d'initialisation contenu dans ladite fenêtre.

5. Le système d'ordinateur de la revendication 4 comprenant en outre:
- des moyens pour récupérer un programme préparatoire pour ladite unité secondaire depuis ladite mémoire principale, avec ledit processeur principal;
- des moyens pour placer ledit programme préparatoire dans ladite fenêtre dudit processeur principal; et
- des moyens pour l'exécution dudit programme préparatoire par ledit processeur secondaire.

6. Le système d'ordinateur de la revendication 4, comprenant en outre:
- des moyens pour la récupération d'un bloc d'un programme préparatoire pour ladite unité secondaire depuis ladite mémoire principale avec ledit processeur principal, ledit programme préparatoire comprenant une pluralité de blocs;
- des moyens pour le placement dudit bloc dans ladite fenêtre avec ledit processeur principal;
- des moyens pour copier ledit bloc dans ladite mémoire secondaire;
- des moyens pour répéter lesdites étapes de récupération, de placement et de copie pour chaque bloc dudit programme préparatoire jusqu'à ce que ledit programme préparatoire soit dans ladite mémoire secondaire;
- des moyens pour l'exécution dudit programme préparatoire par ledit processeur secondaire.

7. Une méthode d'initialisation d'une unité secondaire comportant un processeur secondaire (21), depuis une unité principale comprenant un processeur principal (11), ladite unité principale et ladite unité secondaire étant connectées à un espace d'adresses de mémoire partagée (62) par le bus (19), comprenant les étapes suivantes:
- le retrait d'un programme d'initialisation pour ladite unité secondaire, de la mémoire de ladite unité principale;
- le placement dudit programme d'initialisation dans ledit espace d'adresses de mémoire partagée;
- le déconditionnement de la ligne de restauration dudit processeur secondaire par ledit processeur principal; et
- l'initialisation dudit processeur secondaire à partir dudit programme d'initialisation contenu dans ledit espace d'adresses de mémoire partagée.

8. La méthode de la revendication 7 comprenant en outre les étapes suivantes:
- la récupération d'un programme préparatoire pour ladite unité secondaire depuis ladite mémoire;
- le placement dudit programme préparatoire dans ledit espace d'adresses de mémoire partagée; et
- l'exécution dudit programme préparatoire par ledit processeur secondaire.

9. Un système d'ordinateur comprenant une unité principale (11) connectée à une unité secondaire (21), ladite unité principale et ladite unité secondaire étant connectées à un espace d'adresses de mémoire partagée (62), ladite unité principale comprenant un processeur secondaire et une mémoire secondaire; caractérisé en ce que ledit système d'ordinateur comprend en outre:
- des moyens pour récupérer un programme d'initialisation pour ladite unité secondaire depuis ladite mémoire principale;
- des moyens pour placer ledit programme d'initialisation dans ledit espace d'adresses de mémoire partagée;
- des moyens pour le déconditionnement de la ligne de restauration dudit processeur secondaire par ledit processeur principal; et
- des moyens pour initialiser ledit processeur secondaire à partir dudit programme d'initialisation contenu dans ledit espace d'adresses de mémoire partagée.

10. Le système d'ordinateur de la revendication 9, comprenant en outre:
- des moyens pour récupérer un programme préparatoire pour ladite unité secondaire depuis ladite mémoire principale;
- des moyens pour placer ledit programme préparatoire dans ledit espace d'adresses de mémoire partagée; et
- des moyens pour l'exécution dudit programme préparatoire par ledit processeur secondaire.
